(19) 

Europäisches
Patentamt
European
Patent Office
Office européen
des brevets

(11) **EP 2 143 569 B1**

(12) **EUROPEAN PATENT SPECIFICATION**

(45) Date of publication and mention
of the grant of the patent:
**26.10.2011 Bulletin 2011/43**

(51) Int Cl.:
***B60C 5/14*** *(2006.01)*  ***B29D 30/30*** *(2006.01)*

(21) Application number: **08752284.3**

(22) Date of filing: **01.05.2008**

(86) International application number:
**PCT/JP2008/058365**

(87) International publication number:
**WO 2008/136501 (13.11.2008 Gazette 2008/46)**

(54) **PNEUMATIC TIRE AND PROCESS FOR MANUFACTURING THE SAME**

LUFTREIFEN UND HERSTELLUNGSVERFAHREN DAFÜR

PNEU ET SON PROCÉDÉ DE FABRICATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **01.05.2007 JP 2007120643**

(43) Date of publication of application:
**13.01.2010 Bulletin 2010/02**

(73) Proprietor: **The Yokohama Rubber Co., Ltd.**
**Minato-ku**
**Tokyo 105-8685 (JP)**

(72) Inventors:
• **SHIBATA, Hirokazu**
**Hiratsuka-shi**
**Kanagawa 254-8601 (JP)**
• **MOROOKA, Naoyuki**
**Hiratsuka-shi**
**Kanagawa 254-8601 (JP)**

• **HAZAMA, Hirohisa**
**Hiratsuka-shi**
**Kanagawa 254-8601 (JP)**
• **DANJO, Masamichi**
**Hiratsuka-shi**
**Kanagawa 254-8601 (JP)**
• **KAMEDA, Norifumi**
**Hiratsuka-shi**
**Kanagawa 254-8601 (JP)**
• **HASHIMURA, Yoshiaki**
**Hiratsuka-shi**
**Kanagawa 254-8601 (JP)**

(74) Representative: **HOFFMANN EITLE**
**Patent- und Rechtsanwälte**
**Arabellastraße 4**
**81925 München (DE)**

(56) References cited:
**EP-A1- 1 642 705     WO-A1-2004/110735**
**GB-A- 2 050 933     JP-A- 01 314 164**
**JP-A- 2005 103 760     JP-A- 2007 099 118**
**US-B1- 6 402 867**

**Description**

TECHNICAL FIELD

The present invention relates to a pneumatic tire and a process for manufacturing the same.

BACKGROUND ART

In recent years, there has been proposed that a film of a thermoplastic resin or a thermoplastic elastomer composition obtained by blending an elastomer in a thermoplastic resin is arranged as an air permeation preventive layer on an inner side of a tire. In particular, there has been proposed that the film is molded into a cylindrical shape, and then the cylindrical film is supplied as an intermediate material to a tire molding operation (for example, refer to Japanese patent application Kokai publication No. 2006-315339 and Japanese patent application Kokai publication No. 2006-82273.

The film of a thermoplastic resin or a thermoplastic elastomer composition, which is produced through cylindrical molding, has an advantage of having favorable gas barrier performance since the film excels in plane orientation of polymer chains. However, in the case of using the cylindrical film as the intermediate material, a material supplying method in a tire molding operating differs from that in a case of using a rubber sheet of butyl rubber or the like as the air permeation preventive layer, and therefore a high accuracy is required for alignment when the cylindrical film is placed around a making drum. Accordingly, it is necessary to develop a new material supplying apparatus. Additionally, in a case where the cylindrical film is manually attached on the making drum, productivity for the tire comes to remarkably decrease.

Meanwhile, it is also possible that, after the cylindrical film is formed firstly so that favorable gas barrier performance may be secured, a sheet-like film is obtained by cutting this cylindrical film. In this case, the same material supplying apparatus as is used in the case of using a rubber sheet as the air permeation preventive layer can be used in the tire molding operation. However, when the sheet-like film is obtained from the cylindrical film, work of cutting the cylindrical film into appropriate sizes is required, and, moreover, there is a disadvantage that scraps are generated. Additionally, in a case where the sheet-like film is produced by use of a T-die making machine, although the same material supplying apparatus as conventional one can be used, the film has disadvantages that the flexibility in controlling orientation of polymer chains is lower than that of a cylindrical molded article and that the gas barrier performance is inferior to that of a cylindrical molded article even if the sheet-like film is made of the same composition as the cylindrical molded article.

Further background art is also disclosed in EP 1 642 705 A1; US 6,402,867 B1; and JP 2007 099118 A.

SUMMARY OF THE INVENTION

According to a first aspect of the present invention, there is provided a pneumatic tire comprising an air permeation preventive layer wherein a sheet-like laminate is used as the air permeation preventive layer, the sheet-like laminate being formed from a cylindrical molded article composed of a film of any one of a thermoplastic resin and a thermoplastic elastomer composition obtained by blending an elastomer in a thermoplastic resin, which molded article is crushed into the sheet-like laminate.

According to a second aspect of the present invention, there is provided a process for manufacturing a pneumatic tire, characterized by comprising: molding a cylindrical molded article composed of a film of any one of a thermoplastic resin and a thermoplastic elastomer composition obtained by blending an elastomer in a thermoplastic resin; crushing the cylindrical molded article into a sheet-like laminate; wrapping the sheet-like laminate around a making drum so as to form an unvulcanized tire in which the sheet-like laminate is used as an air permeation preventive layer; and vulcanizing the unvulcanized tire.

Embodiments of the present invention can provide a pneumatic tire and a process for manufacturing the same which enable, in the use of a film of a thermoplastic resin or a thermoplastic elastomer composition obtained by blending an elastomer in a thermoplastic resin as an air permeation preventive layer, formation of the air permeation preventive layer excelling in gas barrier performance, and molding of the tire through a simple molding operation without generating any unnecessary scraps.

A pneumatic tire for achieving this may be characterized in that: a cylindrical molded article composed of a film of a thermoplastic resin or a thermoplastic elastomer composition obtained by blending an elastomer in a thermoplastic resin is crushed into a sheet-like laminate; and the sheet-like laminate is used as an air permeation preventive layer.

In the present invention, in the use of a film of a thermoplastic resin or a thermoplastic elastomer composition as an air permeation preventive layer, a cylindrical molded article composed of the film is molded, the cylindrical molded article is crushed into a sheet-like laminate, and the sheet-like laminate is used as the air permeation preventive layer.

The film of a thermoplastic resin or a thermoplastic elastomer composition thus produced through cylindrical molding can exert favorable gas barrier performance because of excellent plane orientation of polymer chains. Additionally, since the cylindrical molded article is crushed into the sheet-like laminate, the same material supplying apparatus as is used in a case of using a conventional rubber sheet can be used, and, moreover, since the sheet-like laminate does not require a cutting operation for adjusting a size thereof widthwise, a tire can be molded through a simple molding operation without generating any unnecessary scraps.

In the present invention, it is preferable that the cylindrical molded article include, on an outer side of the film, an outermost layer containing a tackiness agent or a tacky adhesive agent. Thereby, adhesiveness between the sheet-like laminate and each of other tire constituent members can be enhanced in an unvulcanized tire and a vulcanized tire.

In the present invention, it is preferable that the cylindrical molded article include, on an inner side of the film, an innermost layer containing a tackiness agent or a tacky adhesive agent. Thereby, adhesiveness between inner sides of the film composing the sheet-like laminate can be enhanced in an unvulcanized tire and a vulcanized tire.

Here, the tackiness agent is a material having stickiness at least when being unvulcanized, and a composition thereof is not particularly limited. Meanwhile, the tacky adhesive agent is a material having stickiness when being unvulcanized, and, after being vulcanized, exhibiting adhesiveness caused by chemical reaction, and a composition thereof is not particularly limited.

In the process for manufacturing the pneumatic tire, it is preferable that, when molding the cylindrical molded article, the innermost layer be formed by spraying powder or liquid which contains the tackiness agent or the tacky adhesive agent. Thereby, the innermost layer containing the tackiness agent or the tacky adhesive agent can be formed on the inner side of the film in the cylindrical molded article in a simple manner.

On the other hand, without providing on the inner side of the film the innermost layer containing the tackiness agent or the tacky adhesive agent, the cylindrical molded article can also be configured to have a structure in which the film is arranged in the innermost side thereof. This case has an advantage that a favorable air permeation preventive layer can be formed by integrating laminated portions of the film in the sheet-like laminate through a vulcanizing operation. However, in a case of arranging a film in the innermost side of the cylindrical molded article, separation between inner faces of the film sometimes occurs after an unvulcanized tire is molded, which results in inward shrinkage of the sheet-like laminate in a radial direction of the tire. For this reason, it is preferable that processing for preventing separation between the inner faces of the film be applied.

As a first separation prevention processing method, thermally fusing the inner faces of the film together at in least one location of the sheet-like laminate can be quoted. In this case, the inner faces of the film are physically bonded together by being thermally fused together in at least one location, whereby, after the unvulcanized tire is molded, separation between the inner faces of the film can be prevented, and, eventually, inward shrinkage of the sheet-like laminate in the tire radial direction can be prevented.

As a second separation prevention processing method, thermally fusing the inner faces of the film together at least in cut ends of the sheet-like laminate can be quoted. In this case, inflow of air into an inside of the film can be prevented, and the inside of the film is maintained in a nearly vacuum state, whereby, after the unvulcanized tire is molded, separation between the inner faces of the film can be prevented, and, eventually, inward shrinkage of the sheet-like laminate in the tire radial direction can be prevented.

As a third separation prevention processing method, folding back cut ends of the sheet-like laminate can be quoted. In this case also, inflow of air into the inside of the film can be prevented, and the inside of the film is maintained in a nearly vacuum state, whereby, after the unvulcanized tire is molded, separation between the inner faces of the film can be prevented, and, eventually, inward shrinkage of the sheet-like laminate in the tire radial direction can be prevented.

As a fourth separation prevention processing method, sealing cut ends of the sheet-like laminate by use of a sealing material can be quoted. In this case also, inflow of air into the inside of the film can be prevented, and the inside of the film is maintained in a nearly vacuum state, whereby, after the unvulcanized tire is molded, separation between the inner faces of the film can be prevented, and, eventually, inward shrinkage of the sheet-like laminate in the tire radial direction can be prevented.

Additionally, it is preferable that the sheet-like laminate be wrapped around the making drum in a state where the sheet-like laminate is bonded to a rubber composition layer. Thereby, durability of the tire can be improved because, when the sheet-like laminate is wrapped around, it becomes hard for wrinkles to occur therein.

BRIEF DESCRIPTION OF THE DRAWINGS

To enable a better understanding of the present invention, and to show how the same may be carried into effect, reference will now be made, by way of example only, to the accompanying drawings, in which:-

Fig. 1 is a meridional cross-sectional view showing a pneumatic tire configured according to an embodiment of the present invention.

Fig. 2 is an explanatory view showing one example of a molding method of a sheet-like laminate in the present invention.

Fig. 3 is an explanatory view showing one example of a molding method of a sheet-like laminate in the present invention.

Fig. 4 is an explanatory view showing one example of a molding method of a sheet-like laminate in the present invention.

Fig. 5 is an explanatory view showing one example of a molding method of a sheet-like laminate in the present invention.

Fig. 6 is a side view showing one example of a manufacturing apparatus for a sheet-like laminate in the present invention.

Fig. 7 is a side view showing one example of a laminating apparatus for a sheet-like laminate and a rubber composition layer in the present invention.

Fig. 8 is a perspective view showing an operation of wrapping a sheet-like laminate around a making drum in the present invention.

Fig. 9 is a plan view showing one example of a first separation prevention processing method for a film in the present invention.

Fig. 10 is a plan view showing one example of a second separation prevention processing method for a film in the present invention.

Fig. 11 is a plan view showing one example of a third separation prevention processing method for a film in the present invention.

Fig. 12 is a plan view showing one example of a fourth separation prevention processing method for a film in the present invention.

DETAILED DESCRIPTION

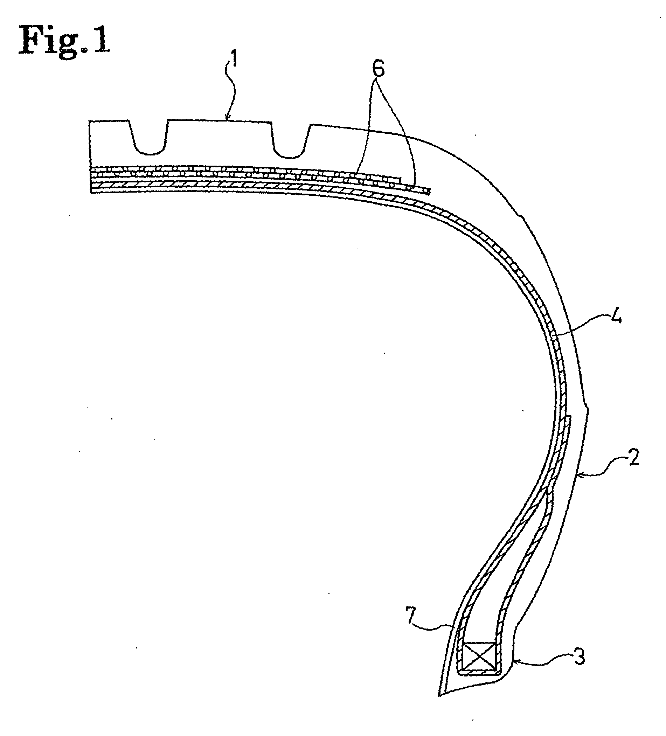

A configuration of the present invention will be described in detail below with reference to the accompanying drawings. Fig. 1 shows a pneumatic tire configured according to an embodiment of the present invention, where: reference numeral 1 denotes a tread portion; reference numeral 2, a side wall; and reference numeral 3, a bead portion. A carcass layer 4 is laid between a pair of right and left bead portions 3, 3. Each end portion of the carcass layer 4 is folded back around a bead core 5 from the inside of the tire to the outside. Plural belt layers 6 are buried in the tread portion 1 on an outer circumference side of the carcass layer 4. These belt layers 6 are arranged so that reinforcing cords of each of the belt layers 6 may be inclined with respect to a circumferential direction of the tire, and that reinforcing cords of one of the belt layers 6 may cross those of another one of the belt layers 6.

In the above pneumatic tire, an air permeation preventive layer 7 is arranged on a side, facing the cavity of the tire, of the carcass layer 4. The air permeation preventive layer 7 is molded by use of a sheet-like laminate after crushing a cylindrical molded article into the sheet-like laminate, the cylindrical molded article being composed of a film of a thermoplastic resin or a thermoplastic elastomer composition obtained by blending an elastomer in a thermoplastic resin.

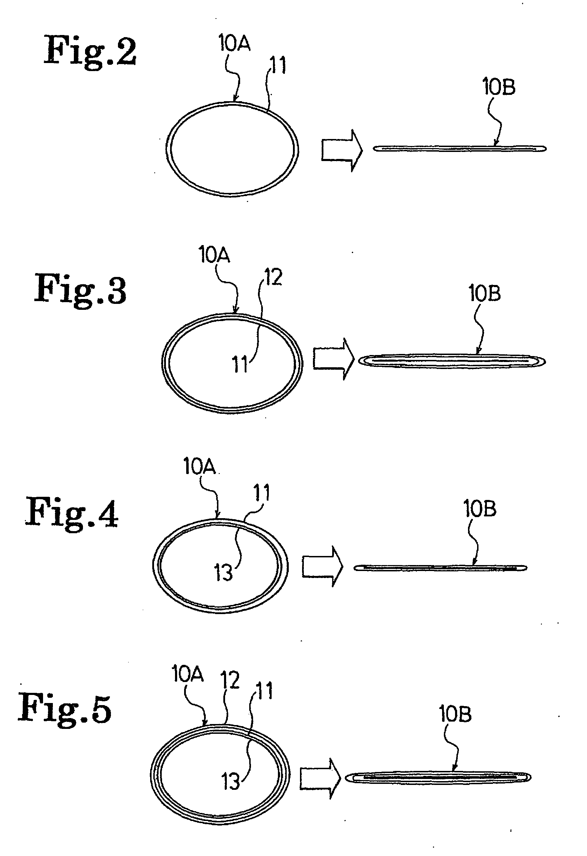

Each of Figs. 2 to 5 shows a molding method of a sheet-like laminate. In Fig. 2, a cylindrical molded article 10A composed of a film 11 of a thermoplastic resin or a thermoplastic elastomer composition is molded, and then, a sheet-like laminate 10B is obtained by crushing the cylindrical molded article 10A in a direction orthogonal to an axial direction thereof.

In Fig. 3, a cylindrical molded article 10A is molded, and then, a sheet-like laminate 10B is obtained by crushing the cylindrical molded article 10A in a direction orthogonal to an axial direction thereof, the cylindrical molded article 10A being composed of: a film 11 of a thermoplastic resin or a thermoplastic elastomer composition; and an outermost layer 12 laminated on the outer side of the film 11 and containing a tackiness agent or a tacky adhesive agent.

In Fig. 4, a cylindrical molded article 10A is molded, and then, a sheet-like laminate 10B is obtained by crushing the cylindrical molded article 10A in a direction orthogonal to an axial direction thereof, the cylindrical molded article 10A being composed of: a film 11 of a thermoplastic resin or a thermoplastic elastomer composition; and an innermost layer 13 which is laminated on the inner side of the film 11 and contains a tackiness agent or a tacky adhesive agent.

In Fig. 5, a cylindrical molded article 10A is molded, and then, a sheet-like laminate 10B is obtained by crushing the cylindrical molded article 10A in a direction orthogonal to an axial direction thereof, the cylindrical molded article 10A being composed of: a film 11 of a thermoplastic resin or a thermoplastic elastomer composition; an outermost layer 12 laminated on the outer side of the film 11 and containing a tackiness agent or a tacky adhesive agent; and an innermost layer 13 laminated on the inner side of the film 11 and containing a tackiness agent or a tacky adhesive agent.

Each of the above described sheet-like laminates 10B has a structure in which the film 11, the outermost layer 12 and the innermost layer 13 are folded at both end portions, in a width direction, of the sheet-like laminate 10B. When this sheet-like laminate 10B is used as an air permeation preventive layer 7, the both end portions of the sheet-like laminate 10B in the width direction may be arranged so as to extend along inner edges of the respective bead portions 3 in a circumference direction of the tire, or otherwise, the both end portions of the sheet-like laminate 10B in the width direction may be arranged so as to extend in a meridional direction of the tire. In the former case, since cut ends (open ends) of the sheet-like laminate 10B are supposed to be spliced together in an arbitrary location on a circumference of the tire after the sheet-like laminate 10B is supplied in a length direction thereof when an unvulcanized tire is molded, it is preferable that processing for preventing the cut ends of the sheet-like laminate 10B from opening be applied in a state where the tire is unvulcanized. In the latter case, since both uncut ends of the sheet-like laminate 10B are supposed to be spliced together in an arbitrary location on a circumference of the tire after the sheet-like laminate 10B is supplied in a width direction thereof when an unvulcanized tire is molded, an inconvenience that the cut ends of the sheet-like laminate 10B open in spliced portions thereof can be reliably avoided.

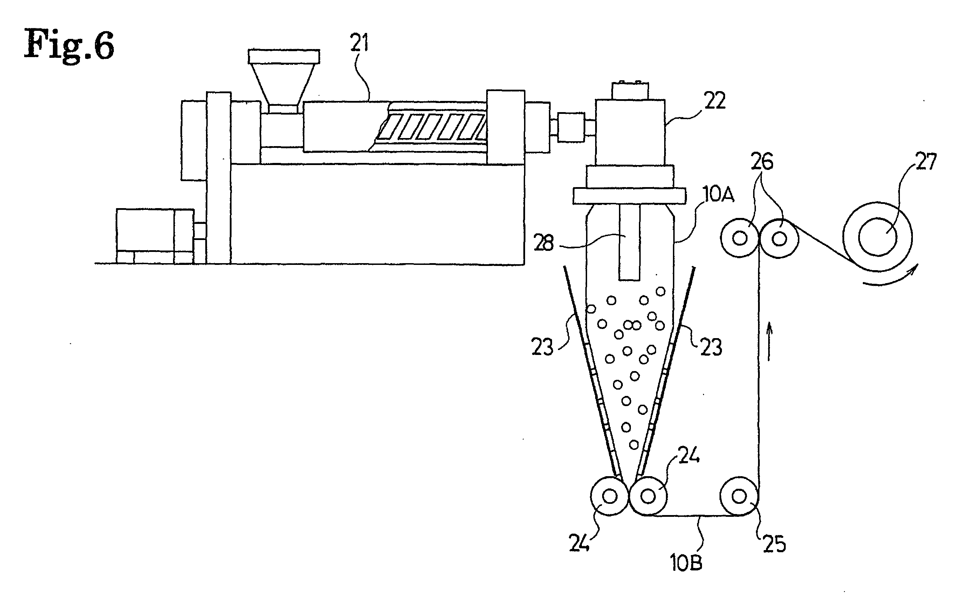

Fig. 6 shows one example of a manufacturing apparatus for each of the sheet-like laminates. In Fig. 6, an extruder 21 is configured to supply constituent materials of the film 11 to a cylinder making machine 22, and the cylinder making machine 22 is configured to output the cylindrical molded article 10A. The cylindrical molded article 10A, is crushed into a planar shape between a pair of pinch rolls 24, 24 after being guided by a pair of guide plates 23, 23, and thereby becomes the sheet-like laminate 10B, and this sheet-like laminate 10B is intended to be rewound by a rewinding apparatus 27 after being guided by a roll 25 and a pair of rolls 26, 26. Additionally, a spraying apparatus 28 for spraying powder or liquid which contains a tackiness agent or a tacky adhesive agent is provided in the cylinder making machine 22.

In a case where the sheet-like laminate is manufactured by use of the above manufacturing apparatus, the constituent materials of the film 11 are continuously supplied to the cylinder making machine 22 from the extruder 21, the cylindrical molded article 10A outputted from the cylinder making machine 22 is crushed between the pair of pinch rolls 24, 24 into the sheet-like laminate 10B, and this sheet-like laminate 10B is intended to be rewound by the rewinding apparatus 27. In the case where the outermost layer 12 containing a tackiness agent or a tacky adhesive agent is laminated on the outer side of the film 11, the cylindrical molded article 10A composed of the film 11 and the outermost layer 12 may be integrally extruded by using a machine capable of molding a double-layer cylinder as the cylinder making machine 22, and connecting another extruder, which supplies constituent materials of the outermost layer 12, to the cylinder making machine 22. On the other hand, in the case where the innermost layer 13 containing a tackiness agent or a tacky adhesive agent is laminated on the inner side of the film 11, the innermost layer 13 may be formed on the inner side of the film 11 by spraying powder or liquid containing the tackiness agent and the tacky adhesive agent onto the inner side of the film 11 when the cylindrical molded article 10A is molded. The sheet-like laminate 10B may be supplied in a tire molding operation without any processing, but otherwise, may be wrapped around a making drum in a state where the sheet-like laminate 10B and a rubber composition layer are pasted together.

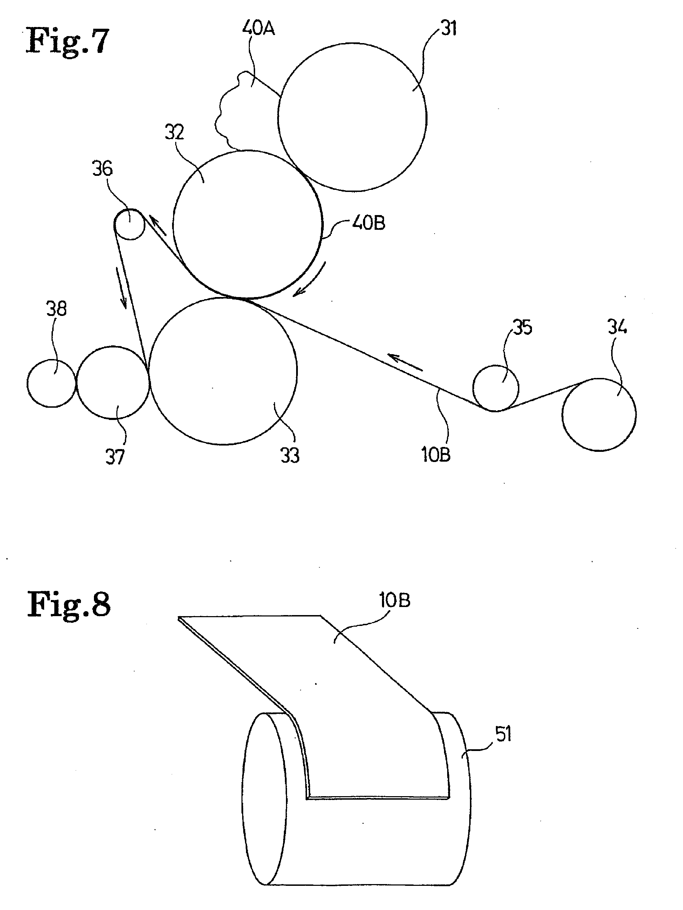

Fig. 7 shows one example of a laminating apparatus for the sheet-like laminate and the rubber composition layer. In Fig. 7, rolls 31 and 32 are arranged with rotation axes thereof being parallel to each other, and are configured to be driven to rotate in opposite directions. These rolls 31 and 32 are designed to let a rubber composition 40A pass through an interstice therebetween, thereby molding a rubber composition layer 40B on an outer circumferential face of the roll 32. Meanwhile, a roll 33 is arranged so as to have a rotation axis thereof parallel to the rotation axis of the roll 32, and is configured to be driven to rotate in a direction opposite to a direction in which the roll 32 rotates. The sheet-like laminate 10B having become unwound from a material supplying apparatus 34 is intended to pass between the rolls 32 and 33 by being guided by a roll 35, and be wound around a winding apparatus 38 by being further guided by rolls 36 and 37.

In a case of laminating the sheet-like laminate and the rubber composition layer by using the above laminating apparatus, the sheet-like laminate 10B is continuously supplied from the material supplying apparatus 34 at the same time as the rubber composition layer 40B is molded by the rolls 31 and 32. Then, the sheet-like laminate 10B and the rubber composition layer 40B are bonded together under pressure between the rolls 32 and 33, and a thus obtained laminate is wound around the winding apparatus 38.

Fig. 8 shows an operation of wrapping the sheet-like laminate around a making drum. As shown in Fig. 8, after being cut into an appropriate length, the sheet-like laminate 10B is wrapped around a making drum 51 as an air permeation preventive layer. After the sheet-like laminate 10B is thus wrapped around the making drum 51, a first green tire is molded by further bonding thereto constituent materials of the tire such as a carcass layer, bead cores, bead fillers and side wall rubbers together. Then, after a second green tire (an unvulcanized tire) is formed by bonding belt layers and a tread rubber together to the first green tire at the same time as radially expanding the first green tire into a troidal state, a vulcanized pneumatic tire is obtained by vulcanizing the secondary green tire.

In the above described pneumatic tire, the cylindrical molded article 10A composed of the film 11 of a thermoplastic resin or a thermoplastic elastomer composition is molded, the cylindrical molded article 10A is crushed into the sheet-like laminate 10B, and the sheet-like laminate 10B is used as the air permeation preventive layer 7. The film 11 of a thermoplastic resin or a thermoplastic elastomer composition, which is thus produced through cylinder molding, can exhibit favorable gas barrier performance because of excellent plane orientation of polymer chains. Additionally, since the sheet-like laminate 10B is obtained by crushing the cylindrical molded article 10A, the same material supplying apparatus as in a case of using a conventional rubber sheet can be used in a tire molding operation, and, moreover, since the sheet-like laminate 10B does not require a cutting operation for adjusting a size thereof widthwise, the tire can be molded through a simple molding operation without generating any unnecessary scraps.

In a manufacturing process of the above pneumatic tire, in the case (for example, refer to each of Figs. 2 and 3) of configuring the cylindrical molded article 10A to have a structure in which the film 11 is arranged in the innermost side thereof without having the innermost layer 13, which contains a tackiness agent or a tacky adhesive agent, provided on the inner side of the film 11, there is an advantage that the favorable air permeation preventive layer 7 is formed by integrating laminated portions of the film 11 in the sheet-like laminate 10B through a vulcanizing operation.

However, in the case where the film 11 is arranged in the innermost side of the cylindrical molded article 10A, inner faces of the film 11 might separate from each other after the unvulcanized tire is molded, and therefore the sheet-like laminate 10B might shrink inward in a radial direction of the tire. Specifically, since the film 11 has a larger shrinkage force than a usual rubber sheet, the inner faces of the film 11 are liable to separate from each other unless the innermost layer 13 containing a tackiness agent and a tacky adhesive agent is provided on the inner side of the film 11. Thus, it is preferable that processing by which separation between the inner faces of the film 11 can be prevented should be applied.

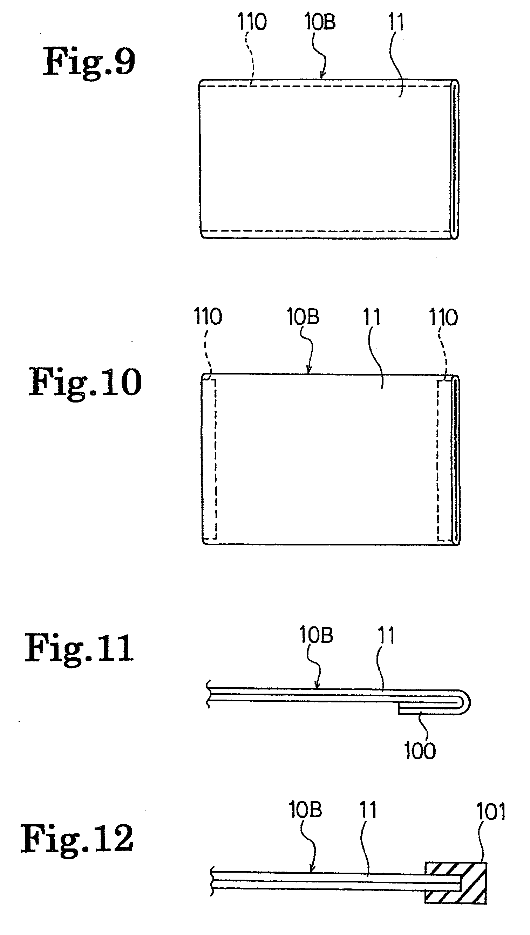

Each of Figs. 9 to 12 shows a separation prevention processing method for a film. In a first separation prevention processing method shown in Fig. 9, in the case where the cylindrical molded article 10A has a structure in which the film 11 is arranged in the innermost side thereof, a thermally fused portion 110 is formed by thermally fusing the inner faces of the film 11 together in at least one location in the sheet-like laminate 10B prior to a molding operation of an unvulcanized tire. More specifically, the thermally fused portion 110 is formed on an entire face of the sheet-like laminate 10B. In this case, the inner faces of the film 11 are physically bonded together by being thermally fused together in at least one location, which prevents, after the unvulcanized tire is molded, separation between inner faces of the film 11, and eventually, inward shrinkage of the sheet-like laminate 10B in a radial direction of the tire. Note that, instead of having the thermally fused portion 110 formed on the entire face of the sheet-like laminate 10B, the entire face of the sheet-like laminate 10B may be interspersed with plural thermally fused portions 110.

In a second separation prevention processing method shown in Fig. 10, in the case where the cylindrical molded article 10A has a structure in which the film 11 is arranged in the innermost side thereof, thermally fused portions 110 are formed by thermally fusing the inner faces of the film 11 together in at least cut ends of the sheet-like laminate 10B prior to a molding operation of an unvulcanized tire. In this case, the cut ends of the sheet-like laminate 10B are closed by the thermally fused portions 110, so that air is prevented from flowing into an inside of the film 11 and the inside of the film 11 is maintained in a nearly vacuum state. This prevents, after the unvulcanized tire is molded, separation between inner faces of the film 11, and eventually, inward shrinkage of the sheet-like laminate 10B in a radial direction of the tire.

In a third separation prevention processing method shown in Fig. 11, in the case where the cylindrical molded article 10A has a structure in which the film 11 is arranged in the innermost side thereof, folded-back portions 100 are formed by folding back cut ends of the sheet-like laminate 10B prior to a molding operation of an unvulcanized tire. In this case, the cut ends of the sheet-like laminate 10B are closed by the folded-back portions 100, so that air is prevented from flowing into an inside of the film 11 and the inside of the film 11 is maintained in a nearly vacuum state. This prevents, after the unvulcanized tire is molded, separation between inner faces of the film 11, and eventually, inward shrinkage of the sheet-like laminate 10B in a radial direction of the tire.

In a fourth separation prevention processing method shown in Fig. 12, in the case where the cylindrical molded article 10A has a structure in which the film 11 is arranged in the innermost side thereof, cut ends of the sheet-like laminate 10B are sealed by use of a sealing material 101 prior to a molding operation of an unvulcanized tire. In this case, the cut ends of the sheet-like laminate 10B are closed by the sealing material 101, air is prevented from flowing into an inside of the film 11, so that the inside of the film 11 is maintained in a nearly vacuum state. This prevents, after the unvulcanized tire is molded, separation between inner faces of the film 11, and eventually, inward shrinkage of the sheet-like laminate 10B in a radial direction of the tire. Note that any one of various rubber compositions can be used for the sealing material, besides the same thermoplastic resin or thermoplastic elastomer composition obtained by blending the elastomer in the thermoplastic resin as is used for the constituent material of the film 11.

The film used in the present invention will be described below. This film can be composed of a thermoplastic resin or a thermoplastic elastomer composition obtained by blending an elastomer in a thermoplastic resin.

Examples of the thermoplastic resin used in the present invention include: polyamide resins [for example, nylon 6 (N6), nylon 66 (N66), nylon 46 (N46), nylon 11 (N11), nylon 12 (N12), nylon 610 (N610), nylon 612 (N612), nylon6/66 copolymers (N6/66), nylon 6/66/610 copolymers (N6/66/610), nylon MXD6, nylon 6T, nylon 6/6T copolymers, nylon 66/PP copolymers and nylon 66/PPS copolymers]; polyester resins [for example, aromatic polyester such as polybutylene terephthalate (PBT), polyethylene terephthalate (PET), polyethylene isophthalate (PEI), polybutylene terephthalate/tetramethylene glycol copolymers, PET/PEI copolymers, polyarylate (PAR), polybutylene naphthalate (PBN), liquid crystal polyester and polyoxyalkylene diimidic diacid/polybutyrate terephthalate copolymers]; polynitrile resins [for example, polyacrylonitrile (PAN), polymethacrylonitrile, acrylonitrile/styrene copolymers (AS), methacrylonitrile/styrene copolymers and methacrylonitrile/styrene/butadiene copolymers]; poly(meth)acrylate resins [for example, polymethyl methacrylate (PMMA), polyethyl methacrylate, ethylene ethyl acrylate copolymers (EEA), ethylene acrylic acid copolymers (EAA) and ethylene methyl acrylate resins (EMA)]; polyvinyl resins [for example, vinyl acetate (EVA), polyvinyl alcohol (PVA), vinyl alcohol/ethylene copolymers (EVOH), polyvinylidene chloride (PDVC), polyvinyl chloride (PVC), vinyl chloride/ vinylidene chloride copolymers and vinylidene chloride/methyl acrylate copolymers]; cellulose resins [for example, cellulose acetate and cellulose acetate butyrate), fluorine resins [for example, polyvinylidene fluoride (PVDF), polyvinyl fluoride (PVF), polychlorofluoroethylene (PCTFE) and tetrafluoroethylene/ethylene copolymers (ETFE)]; and imide resins [for example, aromatic polyimide (PI)]

Examples of the elastomer used in the present invention include: diene rubber and their hydrogenated products [for example, NR, IR, epoxidized natural rubbers, SBR, BR (high-cis BR and low-cis BR) , NBR, hydrogenated NBR and hydrogenated SBR] ; olefin rubbers [for example, ethylene propylene rubbers (EPDM, EPM) and maleic acid-modified ethylene propylene rubber (M-EPM)]; butyl rubber (IIR); copolymers of isobutylene and aromatic vinyl or diene monomer; acryl rubber (ACM) ; ionomer; halogen-containing rubbers [for example, Br-IIR, Cl.-IIR, brominated isobutylene-para-methylstyrene copolymers (Br-IPMS), chloroprene rubber (CR), hydrin rubber (CHC, CHR), chlorosulfonated polyethylene (CSM), chlorinated polyethylene (CM) and maleic acid modified chlorinated polyethylene (M-CM)] ; silicone rubbers [for example, methyl vinyl silicone rubber, dimethyl silicone rubber and methyl phenyl vinyl silicone rubber]; sulfur-containing rubbers [for example, polysulfide rubber), fluororubbers [for example, vinylidene fluoride rubbers, fluoro-containing vinyl ether rubbers, tetrafluoroethylene-propylene rubbers, fluoro-containing silicone rubbers and fluoro-containing phosphazen rubbers]; and thermoplastic elastomers [for example, styrene elastomers, olefin elastomers, polyester elastomers, urethane elastomer and polyamide elastomers].

In the thermoplastic elastomer composition used in the present invention, the composition ratio of a thermoplastic resin component (A) to an elastomer component (B) may be determined as appropriate so as to provide the best balance between a thickness and flexibility of the film, and a preferable range thereof is 10/90 to 90/10, or more preferably, 20/80 to 85/15 (in weight ratio).

In addition to the above essential components (A) and (B) , another polymer such as a compatilizer and a compounding agent can be mixed as a third component in the thermoplastic elastomer composition according to the present invention. The purposes of mixing such other polymers include: improving compatibility between the thermoplastic resin component and the elastomer component, improving film forming workability of the materials, enhancing heat resistance, and reducing costs. Examples of the material used for this include polyethylene, polypropylene, polystyrene, ABS, SBS and polycarbonate.

The above thermoplastic elastomer composition is obtained by previously melting and kneading together the thermoplastic resin and the elastomer (unvulcanized one if it is rubber) by use of a two-shaft kneading extruder or the like, and dispersing the elastomer component in the thermoplastic resin forming a continuous phase. When the elastomer component is vulcanized, the elastomer may be dynamically vulcanized by adding a vulcanizer during the kneading. Additionally, although various compounding agents (excluding vulcanizers) to the thermoplastic resin or the elastomer component may be added during the kneading, it is preferable that the agents be previously mixed therein prior to the kneading. As a kneader used for the kneading of the thermoplastic resin and the elastomer, there is no particular limitation, and a screw extruder, a kneader, a Bambury mixer and a two-shaft kneading extruder can each be listed. Among them, it is preferable that a two-shaft kneading extruder be used for kneading a resin component and a rubber component together, and for dynamically vulcanizing a rubber component. Furthermore, the kneading may be carried out sequentially by use of two or more kinds of kneaders. As one condition of the melting and kneading, a temperature may be higher than a temperature at which the thermoplastic resin can be melted. Additionally, it is preferable that a shearing speed during the kneading be 2500 to 7500 sec$^{-1}$. It is preferable that a time period taken for the entire kneading be 30 seconds to 10 minutes, and that, in a case where a vulcanizer is added, a time period taken for vulcanization after the addition be 15 seconds to 5 minutes. The thermoplastic elastomer composition produced in the above manner is formed into a film by being molded through a resin extruder or by being subjected to calendar molding. A method for the forming thereof into a film may be based on a generally-used method for forming a thermoplastic resin or a thermoplastic elastomer.

The thus obtained thin film of a thermoplastic elastomer assumes a structure in which an elastomer is dispersed as a discontinuous phase in a matrix of a thermoplastic resin. By employment of the dispersed structure in such a state, it becomes possible to set a Young's modulus thereof in a range of 1 MPa to 500 MPa, and to thereby impart thereto rigidity appropriate as a tire constituent material.

Although the above thermoplastic resin or thermoplastic elastomer composition can be used alone after being formed into a film, it is preferable that a layer containing a tackiness agent or a tacky adhesive agent is laminated thereon so that adhesiveness thereof to rubber adjacent thereto or adhesiveness between parts of the film may be enhanced.

Specific examples of the tackiness agent include: acrylic based tackiness agents; vinyl acetate based tackiness agents; vinyl ether based tackiness agents; silicon based tackiness agents; rubber based tackiness agents; rosin based tackiness agents; and terpene based tackiness agents, which are generally used as adhesion ingredients. Any applicable one of these tackiness agents may be laminated on a film by being extruded together, or otherwise, may be sprayed in a liquid form to the film.

Specific examples of the tacky adhesive agent include: ultra high molecular weight polyethylene (UHMWPE) having a molecular weight of 1,000,000 or higher, or more preferably 3,000,000 or higher; acrylate copolymer varieties such as ethylene ethyl acrylate copolymer (EEA), ethylene/methyl acrylate copolymer (EMA) and ethylene/acrylic acid copolymer (EAA) , and their maleic anhydride products; polypropylene (PP) and its maleic acid-modified product; ethylene propylene copolymer and its maleic acid-modified product; polybutadiene resins and their maleic anhydride-modified products; styrene-butadiene-styrene copolymers (SBS); styrene-ethylene-butadiene-estyrene copolymers (SEBS); and thermoplastic fluororesins and thermoplastic polyester resins, and their epoxidized compounds. Additionally, a tackiness component may be added to any applicable one of these adhesive components for the purpose of enhancing workability and adhesiveness thereof. These can be molded into a sheet shape or a film shape, for example, by being extruded by a resin extruder in accordance with a generally-used method. Although a thickness of a tacky adhesive layer is not particularly limited, a smaller thickness is preferable for weight reduction of a tire, and it is preferable that the thickness be 5 $\mu$m to 150 $\mu$m.

While the preferred embodiments of the present invention have been described above in detail, it shall be understood that the present invention can be variously modified, substituted and replaced within the scope not departing from the spirit and scope of the present invention which are defined by the scope of the appended claims.

EXAMPLES

With respect to pneumatic radial tires each having a tire size of 195/65R15, unvulcanized tires were molded with supplying methods of inner liner materials being made variously different, and the pneumatic radial tires (Examples 1 to 3 and Comparative Examples 1 to 3) were produced by being vulcanized under conditions of a temperature of 185°C, a vulcanization time period of 15 minutes, and a pressure of 2.3 MPa, the inner liner materials becoming air permeation preventive layers.

Example 1: A cylindrical molded article having a circumferential length of 900 mm and a thickness of 20 $\mu$m (a 5-$\mu$m outermost layer containing a tacky adhesive agent and a 15-$\mu$m film of a thermoplastic elastomer composition) was produced by use of a double-layer cylinder making machine at a pulling speed of 10 mm/min, and subsequently, the cylindrical molded article was crushed with pinch rolls, whereby a sheet-like laminate was obtained. A rubber laminate was produced by bonding unvulcanized rubber composition sheets to this sheet-like laminate from above and below, the rubber composition sheets each having a thickness of 0. 2 mm. With this rubber laminate being used as the inner liner material, an unvulcanized tire was molded according to a publicly known method, and this unvulcanized tire was vulcanized. This case allowed the same material supplying apparatus as is used in a case of using a conventional inner liner material composed of a rubber sheet to be used, and, moreover, allowed the tire to be molded through a simple molding operation without generating any unnecessary scraps since the sheet-like laminate did not require a cutting operation for adjusting a size thereof widthwise.

Example 2: A cylindrical molded article having a circumferential length of 900 mm and a thickness of 20 $\mu$m (a 5-$\mu$m outermost layer containing a tacky adhesive agent and a 15-$\mu$m film of a thermoplastic elastomer composition) was produced by use of a double-layer cylinder making machine at a pulling speed of 10 mm/min, and subsequently, the cylindrical molded article was crushed with pinch rolls, whereby a sheet-like laminate was obtained. Note that, in the above cylindrical molded article, an innermost layer was formed on an inner side of the film by spraying, onto the inner side of the film, liquid containing the tacky adhesive agent. A rubber laminate was produced by bonding unvulcanized rubber composition sheets to this sheet-like laminate from above and below, the rubber composition sheets each having a thickness of 0.2 mm. With this rubber laminate being used as the inner liner material, an unvulcanized tire was molded according to a publicly known method, and the unvulcanized tire was vulcanized. This case allowed the same material supplying apparatus as is used in a case of using a conventional inner liner material composed of a rubber sheet to be used, and, moreover, allowed the tire to be molded through a simple molding operation without generating any unnecessary scraps since the sheet-like laminate did not require a cutting operation for adjusting a size thereof widthwise.

Example 3: A cylindrical molded article having a circumferential length of 900 mm and a thickness of 20 $\mu$m (a 5-$\mu$m outermost layer containing a tacky adhesive agent and a 15-$\mu$m film of a thermoplastic resin) was produced by use of a double-layer cylinder making machine at a pulling speed of 10 mm/min, and subsequently, the cylindrical molded article was crushed with pinch rolls, whereby a sheet-like laminate was obtained. Note that, in the above cylindrical molded article, an innermost layer was formed on an inner side of the film by spraying, onto the inner side of the film, liquid containing the tacky adhesive agent. A rubber laminate was produced by bonding unvulcanized rubber composition sheets to this sheet-like laminate from above and below, the rubber composition sheets each having a thickness of 0.2 mm. With this rubber laminate being used as the inner liner material, an unvulcanized tire was molded according to a publicly known method, and the unvulcanized tire was vulcanized. This case allowed the same material supplying apparatus as is used in a case of using a conventional inner liner material composed of a rubber sheet to be used, and, moreover, allowed the tire to be molded through a simple molding operation without generating any unnecessary scraps since the sheet-like laminate did not require a cutting operation for adjusting a size thereof widthwise.

Comparative Example 1: A sheet-like laminate having a width of 450 mm and a thickness of 40 $\mu$m (a 5-$\mu$m front-side layer containing a tacky adhesive agent, a 30-$\mu$m film of a thermoplastic elastomer composition and a 5-$\mu$m backside layer containing a tacky adhesive agent) was produced by use of a triple layer T-die making machine at a pulling speed of 10 mm/min. A rubber laminate was produced by bonding unvulcanized rubber composition sheets to this sheet-like laminate from above and below, the rubber composition sheets each having a thickness of 0.2 mm. With this rubber laminate being used as the inner liner material, an unvulcanized tire was molded according to a publicly known method, and the unvulcanized tire was vulcanized. This case allowed the same material supplying apparatus as is used in a case of using a conventional inner liner material composed of a rubber sheet to be used, and, moreover, allowed the tire to be molded through a simple molding operation without generating any unnecessary scraps since the sheet-like laminate did not require a cutting operation for adjusting a size thereof widthwise.

Comparative Example 2: A cylindrical molded article having a circumferential length of 900 mm and a thickness of 35 $\mu$m (a 5-$\mu$m outermost layer containing a tacky adhesive agent and a 30-$\mu$m film of a thermoplastic elastomer) was produced by use of a double-layer cylinder making machine at a pulling speed of 10 mm/min. With this cylindrical molded article being used as the inner liner material, an unvulcanized tire was molded according to a publicly known method, and the unvulcanized tire was vulcanized, the publicly known method being configured for fitting the cylindrical molded article into a making drum. In this case, an operation of fitting the cylindrical molded article into the making drum was manually carried out, and therefore, it took a vast amount of time to carry out a tire molding operation as compared to a case of using a conventional inner liner material composed of a rubber sheet. That is, a new apparatus for automatically and accurately fitting the cylindrical molded article into a making drum is necessary in order to efficiently carry out the tire molding operation.

Comparative Example 3: A cylindrical molded article having a circumferential length of 900 mm and a thickness of 35 $\mu$m (a 5-$\mu$m outermost layer containing a tacky adhesive agent and a 30-$\mu$m film of thermoplastic elastomer composition) was produced by use of a double-layer cylinder making machine at a pulling speed of 10 mm/min. This cylindrical molded article was cut into a predetermined size, whereby a sheet-like laminate was obtained. A rubber laminate was produced by bonding unvulcanized rubber composition sheets to this sheet-like laminate from above and below, the rubber composition sheets each having a thickness of 0.2 mm. With this rubber laminate being used as the inner liner material, an unvulcanized tire was molded according to a publicly known method, and the unvulcanized tire was vulcanized. This case allowed the same material supplying apparatus as is used in a case of using a conventional inner liner material composed of a rubber sheet to be used, but generated unnecessary scraps when the cylindrical molded article was cut.

Note that, as each of the thermoplastic Elastomer compositions, one with blended proportions shown in Table 1 below was used. As the thermoplastic resin, nylon 66 was used. As each of the tacky adhesive agent, one with blended proportions shown in Table 2 below was used. As each of the rubber compositions composing the respective rubber composition sheets, one with blended proportions shown in Table 3 below was used.

[Table 1]

| Thermoplastic Elastomer Composition | Blended Proportions (Parts by Weight) |
|---|---|
| Nylon 66 | 45 |
| Brominated BIMS | 55 |
| N-butylebenzenesulfonamide | 10 |
| Zinc oxide | 0.5 |
| Stearic acid | 0.3 |

[Table 2]

| Tacky Adhesive Agent | Blended Proportions (Parts by Weight) |
|---|---|
| Epoxidized styrene butadiene copolymer | 100 |
| Poly(1-methyl-4-(1-methylethynyl)-cyclohexene) | 30 |
| Benzyl peroxide | 2 |
| Zinc oxide | 1 |

[Table 3]

| Rubber Composition | Blended Proportions (Parts by Weight) |
|---|---|
| Natural rubber | 50 |
| Styrene butadiene copolymer | 50 |
| Carbon black | 50 |
| Sulfur | 5 |
| Benzyl peroxide | 2 |
| Zinc oxide | 3 |
| Stearic acid | 1.5 |
| N-cyclohexyl-2-benzothiazolylsulfena mide | 3 |

Additionally, air leakage rates were measured in the following manner with respect to the tires obtained by Examples 1 to 3 and Comparative Examples 1 to 3, and results thereof are shown in Table 4.

Air leakage rate:

Each of the test tires was assembled to a wheel having a rim size of 15 × 6JJ, and was left for three months with an initial pressure set at 200 kPa at a room temperature of 21°C in an unloaded condition. An internal pressure thereof was measured every four-days, and an $\alpha$ value was recursively obtained by Pt/PO = exp(-$\alpha$t) with the measured pressure, the initial pressure, and the number of days elapsed being denoted as Pt, P0 and t, respectively. By using the thus obtained $\alpha$ value and substituting t with 30 (days), a pressure decreasing rate $\beta$ (%/month) per month was obtained by Equation (1) shown below:

$$\beta = [1 - \exp(-\alpha t)] \times 100 \qquad (1)$$

[Table 4]

| | Example 1 | Example 2 | Example 3 | Comparative Example 1 | Comparative Example 2 | Comparative Example 3 |
|---|---|---|---|---|---|---|
| Molding method of inner liner material | Crushing of cylindrical film | Crushing of cylindrical film | Crushing of cylindrical film | T-die molded article | Use of cylindrical film | Cutting of cylindrical film |
| Necessity of new material supplying apparatus | Unnecessary | Unnecessary | Unnecessary | Unnecessary | Necessary | Unnecessary |
| Presence or absence of scraps | Absent | Absent | Absent | Absent | Absent | Present |
| Air leakage rate (%/ month) | 2.20 | 2.10 | 2.10 | 2.50 | 2.20 | 2.20 |

As is apparent from Table 1 shown above, each of the tires of Examples 1 to 3 showed lower air leakage rates than the tire of Comparative Example 1 because of using the films of the thermoplastic resin or the thermoplastic elastomer composition which were produced through cylindrical molding.

Next, with respect to pneumatic radial tires each having a tire size of 195/65R15, unvulcanized tires were molded with supplying methods of inner liner materials being made variously different, and the pneumatic radial tires (Examples 4 to 7) were produced by being vulcanized under conditions of a temperature of 185 °C, a vulcanization time period of 15 minutes, and a pressure of 2.3 MPa, the inner liner materials becoming air permeation preventive layers.

Example 4: A cylindrical molded article having a circumferential length of 1200 mm and a thickness of 50 $\mu$m (where: an outermost layer containing a 5-$\mu$m tacky adhesive agent and a 45-$\mu$m film of a thermoplastic elastomer composition) was produced by use of a double-layer cylinder making machine at a pulling speed of 10 mm/min, and subsequently, the cylindrical molded article was crushed with pinch rolls, whereby a sheet-like laminate was obtained. After inner faces of the film were thermally fused together by causing this sheet-like laminate to pass between a pair of rolls having been heated to 180°C, a rubber laminate was produced by bonding unvulcanized rubber composition sheets to this sheet-like laminate from above and below, the rubber composition sheets each having a thickness of 0.2 mm. With this rubber laminate being used as the inner liner material, an unvulcanized tire was molded according to a publicly known method, and the unvulcanized tire was vulcanized.

Example 5: The tire was obtained in the same manner as the tire of Example 4 except that inner faces of the film were locally thermally fused together in cut ends of the sheet-like laminate.

Example 6: A cylindrical molded article having a circumferential length of 1200 mm and a thickness of 50 $\mu$m (a 5-$\mu$m outermost layer containing a tacky adhesive agent and a 45-$\mu$m film of a thermoplastic elastomer composition) was produced by use of a double-layer cylinder making machine at a pulling speed of 10 mm/min, and subsequently, the cylindrical molded article was crushed with pinch rolls, whereby a sheet-like laminate was obtained. When this sheet-like laminate was wrapped as the inner liner around a making drum, one cut end of the sheet-like laminate, from which the wrapping was started, was folded back with outer faces of the film bonded together with pressure, and the other cut end of the sheet-like laminate, at which the wrapping was ended, was folded back likewise with outer faces of the film bonded together with pressure. Thereafter, an unvulcanized tire was molded according to a publicly known method, and the unvulcanized tire was vulcanized.

Example 7: A cylindrical molded article having a circumferential length of 1200 mm and a thickness of 50 $\mu$m (a 5-$\mu$m outermost layer containing a tacky adhesive agent and a 45-$\mu$m film of a thermoplastic elastomer composition) was produced by use of a double-layer cylinder making machine at a pulling speed of 10 mm/min, and subsequently, the cylindrical molded article was crushed with pinch rolls, whereby a sheet-like laminate was obtained. Before this sheet-like laminate was wrapped as the inner liner around a making drum, one cut end of the sheet-like laminate, from which the wrapping was started, was sealed by use of a sealing material composed of a rubber composition, and, the other cut end thereof, at which the wrapping was ended, was sealed likewise by use of a sealing material composed of a rubber composition. Thereafter, an unvulcanized tire was molded according to a publicly known method, and the unvulcanized tire was vulcanized.

Each of Examples 4 to 7 allowed the same material supplying apparatus as is used in a case of using a conventional inner liner material composed of a rubber sheet to be used, and, moreover, allowed the tire to be molded through a simple molding operation without generating any unnecessary scraps since the sheet-like laminate did not require a cutting operation for adjusting a size thereof widthwise. Additionally, when states of the sheet-like laminates were observed after the unvulcanized tires were molded, it was found in each of these cases that separation between inner faces of the film did not occur. Furthermore, when states of inner faces of the vulcanized tires were observed, it was found in each of these cases that any vulcanization defects, such as cracks attributable to wrinkles in the film, and blisters attributable to separation of the film, did not occur.

**Claims**

1. A pneumatic tire comprising an air permeation preventive layer (7) wherein a sheet-like laminate (10B) is used as the air permeation preventive layer, the sheet-like laminate being formed from a cylindrical molded article (10A) composed of a film (11) of any one of a thermoplastic resin and a thermoplastic elastomer composition obtained by blending an elastomer in a thermoplastic resin, which molded article is crushed into the sheet-like laminate.

2. The pneumatic tire according to claim 1, **characterized in that** the cylindrical molded article (10A) includes, on an outer side of the film (11), an outermost layer (12) containing any one of a tackiness agent and a tacky adhesive agent.

3. The pneumatic tire according to any one of claims 1 and 2, **characterized in that** the cylindrical molded article (10A) includes, on an inner side of the film, an innermost layer (13) containing any one of a tackiness agent and a tacky adhesive agent.

4. The pneumatic tire according to any one of claims 1 and 2, **characterized in that**: the cylindrical molded article (10A) has a structure in which the film (11) is arranged in the innermost side thereof; and inner faces of the film are thermally fused together in at least one location (110) of the sheet-like laminate.

5. The pneumatic tire according to any one of claims 1 and 2, **characterized in that**: the cylindrical molded article (10A) has a structure in which the film (11) is arranged in the innermost side thereof; and inner faces of the film are thermally fused together at least in cut ends of the sheet-like laminate.

6. The pneumatic tire according to any one of claims 1 and 2, **characterized in that**: the cylindrical molded article (10A) has a structure in which the film (11) is arranged in the innermost side thereof; and cut ends (100) of the sheet-like laminate are folded back.

7. The pneumatic tire according to any one of claims 1 and 2, **characterized in that**: the cylindrical molded article (10A) has a structure in which the film (11) is arranged in the innermost side thereof; and cut ends of the sheet-like laminate are sealed by use of a sealing material (101).

8. The pneumatic tire according to any one of claims 1 to 7, **characterized in that** the sheet-like laminate is used in a state where the sheet-like laminate is bonded to a rubber composition layer.

9. A process for manufacturing a pneumatic tire, **characterized by** comprising:

   molding a cylindrical molded article (10A) composed of a film (11) of any one of a thermoplastic resin and a thermoplastic elastomer composition obtained by blending an elastomer in a thermoplastic resin;
   crushing the cylindrical molded article (10A) into a sheet-like laminate (10B);
   wrapping the sheet-like laminate around a making drum (51) so as to form an unvulcanized tire in which the sheet-like laminate is used as an air permeation preventive layer; and
   vulcanizing the unvulcanized tire.

10. The process for manufacturing a pneumatic tire according to claim 9, **characterized in that** the cylindrical molded article (10A) includes, on an outer side of the film (11), an outermost layer (12) containing any one of a tackiness agent and a tacky adhesive agent.

11. The process for manufacturing a pneumatic tire according to any one of claims 9 and 10, **characterized in that** the cylindrical molded article (10A) includes, on an inner side of the film, an innermost layer (13) containing any one of a tackiness agent and a tacky adhesive agent.

12. The process for manufacturing a pneumatic tire according to claim 11, **characterized in that**, when the cylindrical molded article (10A) is molded, the innermost layer (13) is formed on the inner side of the film (11) by spraying powder or liquid, which contains any one of the tackiness agent and the tacky adhesive agent.

13. The process for manufacturing a pneumatic tire according to any one of claims 9 and 10, **characterized in that**: the cylindrical molded article (10A) has a structure in which the film (11) is arranged in the innermost side thereof; and inner faces of the film (11) are thermally fused together in at least one location (110) of the sheet-like laminate.

14. The process for manufacturing a pneumatic tire according to any one of claims 9 and 10, **characterized in that**: the cylindrical molded article (10A) has a structure in which the film (11) is arranged in the innermost side thereof; and inner faces of the film (11) are thermally fused together at least in cut ends of the sheet-like laminate.

15. The process for manufacturing a pneumatic tire according to any one of claims 9 and 10, **characterized in that**: the cylindrical molded article (10A) has a structure in which the film (11) is arranged in the innermost side thereof; and cut ends (100) of the sheet-like laminate are folded back.

16. The process for manufacturing a pneumatic tire according to any one of claims 9 and 10, **characterized in that**: the cylindrical molded article (10A) has a structure in which the film (11) is arranged in the innermost side thereof; and cut ends of the sheet-like laminate are sealed by use of a sealing material (101).

17. The process for manufacturing a pneumatic tire according to any one of claims 9 to 16, **characterized in that** the sheet-like laminate (10B) is wrapped around the making drum (51) in a state where the sheet-like laminate and a rubber composition layer are bonded together.

**Patentansprüche**

1. Luftreifen mit einer Schicht (7), die den Durchtritt von Luft verhindert, wobei ein folienartiges Laminat (10B) als die Schicht, die den Durchtritt von Luft verhindert, benutzt wird, wobei das folienartige Laminat aus einem zylindrischen Gussartikel (10A) gebildet wurde, der aus einem Film (11) aus einem thermoplastischen Kunstharz oder einer thermoplastischen Elastomermischung besteht, die erhalten wurde, indem ein Elastomer in ein thermoplastisches Kunstharz gemischt wurde, wobei der Gussartikel zu dem folienartigen Laminat gepresst wurde.

2. Luftreifen nach Anspruch 1, **dadurch gekennzeichnet, dass** der zylindrische Gussartikel (10A) auf einer äußeren Seite des Films (11) eine äußerste Schicht (12) aufweist, die einen Klebstoff oder einen klebrigen Haftstoff aufweist.

3. Luftreifen nach einem der Ansprüche 1 bis 2, **dadurch gekennzeichnet, dass** der zylindrische Gussartikel (10A) auf einer inneren Seite des Films ein innerste Schicht (13) aufweist, die einen Klebstoff oder einen klebrigen Haftstoff aufweist.

4. Luftreifen nach einem der Ansprüche 1 bis 2, **dadurch gekennzeichnet, dass** der zylindrische Gussartikel (10A) eine Struktur aufweist, bei welcher der Film (11) auf der innersten Seite von diesem angeordnet ist und innere Flächen des Films thermisch miteinander an wenigstens einer Stelle (110) des folienartigen Laminats verbunden sind.

5. Luftreifen nach einem der Ansprüche 1 bis 2, **dadurch gekennzeichnet, dass** der zylindrische Gussartikel (10A) eine Struktur aufweist, bei welcher der Film (11) auf der innersten Seite von diesem angeordnet ist und innere Flächen des Films wenigstens an Schnittenden des folienartigen Laminats thermisch miteinander verbunden sind.

6. Luftreifen nach einem der Ansprüche 1 bis 2, **dadurch gekennzeichnet, dass** der zylindrische Gussartikel (10A) eine Struktur aufweist, bei welcher der Film (11) auf der innersten Seite von diesem angeordnet ist und Schnittenden (100) des folienartigen Laminats herumgebogen sind.

7. Luftreifen nach einem der Ansprüche 1 bis 2, **dadurch gekennzeichnet, dass** der zylindrische Gussartikel (10A) eine Struktur aufweist, bei welcher der Film (11) auf der innersten Seite von diesem angeordnet ist und Schnittenden des folienartigen Laminats unter Benutzung eines Versiegelungsmaterials (101) versiegelt sind.

8. Luftreifen nach einem der Ansprüche 1 bis 7, **dadurch gekennzeichnet, dass** das folienartige Laminat in einem Zustand benutzt wird, in dem das folienartige Laminat mit einer Gummimischungsschicht verbunden ist.

9. Verfahren zum Herstellen eines Luftreifens, **dadurch gekennzeichnet, dass** es aufweist:

   das Gießen eines zylindrischen Gussartikels (10A), der aus einem Film (11) aus einem thermoplastischen Kunstharz oder einer thermoplastischen Elastomermischung besteht, die erhalten wurde, indem ein Elastomer in ein thermoplastisches Kunstharz gemischt wurde;
   das Pressen des zylindrischen Gussartikels (10A) zu einem folienartigen Laminat (10B);
   das Wickeln des folienartigen Laminats um eine Herstellungstrommel (51), um somit einen unvulkanisierten Reifen zu bilden, bei dem das folienartige Laminat als eine Schicht, die den Durchtritt von Luft verhindert, benutzt wird; und
   das Vulkanisieren des unvulkanisierten Reifens.

10. Verfahren zum Herstellen eines Luftreifens nach Anspruch 9, **dadurch gekennzeichnet, dass** der zylindrische Gussartikel (10A) auf einer äußeren Seite des Films (11) eine äußerste Schicht (12) aufweist, die einen Klebstoff oder einen klebrigen Haftstoff enthält.

11. Verfahren zum Herstellen eines Luftreifens nach einem der Ansprüche 9 und 10, **dadurch gekennzeichnet, dass** der zylindrische Gussartikel (10A) auf einer inneren Seite des Films (11) eine innerste Schicht (13) aufweist, die einen Klebstoff oder einen klebrigen Haftstoff enthält.

**12.** Verfahren zum Herstellen eines Luftreifens nach Anspruch 11, **dadurch gekennzeichnet, dass**, wenn der zylindrische Gussartikel (10A) gegossen wird, die innerste Schicht (13) auf der inneren Seite des Films (11) durch Sprühen eines Pulvers oder einer Flüssigkeit ausgebildet wird, die den Klebstoff oder den klebrigen Haftstoff enthält.

**13.** Verfahren zum Herstellen eines Luftreifens nach einem der Ansprüche 9 und 10, **dadurch gekennzeichnet, dass** der zylindrische Gussartikel (10A) eine Struktur aufweist, bei welcher der Film (11) auf der innersten Seite von diesem angeordnet ist und innere Flächen des Films (11) an wenigstens einer Stelle (110) des folienartigen Laminats thermisch miteinander verbunden sind.

**14.** Verfahren zum Herstellen eines Luftreifens nach einem der Ansprüche 9 und 10, **dadurch gekennzeichnet, dass** der zylindrische Gussartikel (10A) eine Struktur aufweist, bei welcher der Film (11) auf der innersten Seite von diesem angeordnet ist und innere Flächen des Films (11) an wenigstens den Schnittenden des folienartigen Laminats thermisch verbunden sind.

**15.** Verfahren zum Herstellen eines Luftreifens nach einem der Ansprüche 9 und 10, **dadurch gekennzeichnet, dass** der zylindrische Gussartikel (10A) eine Struktur aufweist, bei welcher der Film (11) auf der innersten Seite von diesem angeordnet ist und Schnittenden (100) des folienartigen Laminats herumgebogen sind.

**16.** Verfahren zum Herstellen eines Luftreifens nach einem der Ansprüche 9 und 10, **dadurch gekennzeichnet, dass** der zylindrische Gussartikel (10A) eine Struktur aufweist, bei welcher der Film (11) auf der innersten Seite von diesem angeordnet ist und Schnittenden des folienartigen Laminats unter Benutzung eines Versiegelungsmaterials (101) versiegelt sind.

**17.** Verfahren zum Herstellen eines Luftreifens nach einem der Ansprüche 9 bis 16, **dadurch gekennzeichnet, dass** das folienartige Laminat (10B) um die Herstellungstrommel (51) in einem Zustand herumgewickelt wird, in dem das folienartige Laminat und eine Gummimischungsschicht miteinander verbunden sind.

**Revendications**

**1.** Bandage pneumatique comprenant une couche empêchant une perméation de l'air (7), où un laminé en forme de feuille (10B) est utilisé comme couche empêchant une perméation de l'air, le laminé en forme de feuille étant réalisé à partir d'un article cylindrique moulé (10A) constitué d'un film (11) de l'une quelconque parmi une résine thermoplastique et une composition d'élastomère thermoplastique obtenue en mélangeant un élastomère avec une résine thermoplastique, ledit article moulé est broyé en un laminé en forme de feuille.

**2.** Bandage pneumatique selon la revendication 1, **caractérisé en ce que** l'article cylndrique moulé (10A) comprend, sur un côté extérieur du film (11), une couche la plus extérieure (12) contenant l'un quelconque parmi un agent ayant tendance à coller et un agent adhésif collant.

**3.** Bandage pneumatique selon l'une quelconque des revendications 1 et 2, **caractérisé en ce que** l'article cylindrique moulé (10A) comprend, sur un côté intérieur du film, une couche la plus intérieure (13) contenant l'un quelconque parmi un agent ayant tendance à coller et un agent adhésif collant.

**4.** Bandage pneumatique selon l'une quelconque des revendications 1 et 2, **caractérisé en ce que**: l'article cylindrique moulé (10A) a une structure dans laquelle le film (11) est agencé dans son côté le plus intérieur; et les faces intérieures du film sont thermiquement fusionnées ensemble dans le au moins un emplacement (110) du laminé en forme de feuille.

**5.** Bandage pneumatique selon l'une quelconque des revendications 1 et 2, **caractérisé en ce que**: l'article cylindrique moulé (10A) a une structure dans laquelle le film (11) est agencé sur son côté le plus intérieur; et les faces intérieures du film sont thermiquement fusionnées ensemble au moins aux extrémités coupées du laminé en forme de feuille.

**6.** Bandage pneumatique selon l'une quelconque des revendications 1 et 2, **caractérisé en ce que**: l'article cylindrique moulé (10A) a une structure dans laquelle le film (11) est agencé dans son côté le plus intérieur; et les extrémités coupées (100) du laminé en forme de feuille sont repliées.

**7.** Bandage pneumatique selon l'une quelconque des revendications 1 et 2, **caractérisé en ce que**: l'article cylindrique moulé (10A) a une structure dans laquelle le film (11) est agencé à son côté le plus intérieur; et les extrémités coupées du laminé en forme de feuille sont scellées en utilisant un matériau de scellement (101).

8. Bandage pneumatique selon l'une quelconque des revendications 1 à 7, **caractérisé en ce que** le laminé en forme de feuille est utilisé dans un état où le laminé en forme de feuille est lié à une couche de composition de caoutchouc.

9. Procédé de fabrication d'un bandage pneumatique, **caractérisé en** comprenant:

mouler un article cylindrique moulé (10A) constitué d'un film (11) en une quelconque d'une résine thermoplastique et d'une composition d'élastomère thermoplastique obtenue en mélangeant un élastomère avec la résine thermoplastique;
broyer l'article cylindrique moulé (10A) en un laminé en forme de feuille (10B);
enrouler le laminé en forme de feuille autour d'un tambour de fabrication (51) de manière à former un bandage non vulcanisé dans lequel le laminé en forme de feuille est utilisé comme couche empêchant une perméation de l'air; et
vulcaniser le bandage non vulcanisé.

10. Procédé de fabrication d'un bandage pneumatique selon la revendication 9, **caractérisé en ce que** l'article cylindrique moulé (10A) comprend, sur un côté extérieur du film (11), une couche la plus extérieure (12) contenant l'un parmi un agent tendant à coller et un agent adhésif collant.

11. Procédé de fabrication d'un bandage pneumatique selon l'une quelconque des revendications 9 et 10, **caractérisé en ce que** l'article cylindrique moulé (10A) comprend, sur un côté intérieur du film, une couche la plus intérieure (13) contenant l'un quelconque parmi un agent tendant à coller et un agent adhésif collant.

12. Procédé de fabrication d'un bandage pneumatique selon la revendication 11, **caractérisé en ce que**, lorsque l'article cylindrique moulé (10A) est moulé, la couche la plus intérieure (13) est formée sur le côté intérieur du film (11) en projetant de la poudre ou du liquide qui contient l'un parmi l'agent tendant à coller et l'agent adhésif collant.

13. Procédé de fabrication d'un bandage pneumatique selon l'une quelconque des revendications 9 et 10, **caractérisé en ce que**: l'article cylindrique moulé (10A) a une structure dans laquelle le film (11) est agencé à son côté le plus intérieur; et les faces intérieures du film (11) sont thermiquement fusionnées ensemble à au moins un emplacement (110) du laminé en forme de feuille.

14. Procédé de fabrication d'un bandage pneumatique selon l'une quelconque des revendications 9 et 10, **caractérisé en ce que**:

l'article cylindrique moulé (10A) a une structure dans laquelle le film (11) est agencé à son côté le plus intérieur; et les faces intérieures du film (11) sont thermiquement fusionnées ensemble au moins dans les extrémités coupées du laminé en forme de feuille.

15. Procédé de fabrication d'un bandage pneumatique selon l'une quelconque des revendications 9 et 10, **caractérisé en ce que**: l'article cylindrique moulé (10A) a une structure dans laquelle le film (11) est agencé à son côté le plus intérieur; et les extrémités coupées (100) du laminé en forme de feuille sont repliées.

16. Procédé de fabrication d'un bandage pneumatique selon l'une quelconque des revendications 9 et 10, **caractérisé en ce que**: l'article cylindrique moulé (10A) a une structure dans laquelle le film (11) est agencé dans son côté le plus intérieur; et les extrémités coupées du laminé en forme de feuille sont scellées en utilisant un matériau de scellement (101).

17. Procédé de fabrication d'un bandage pneumatique selon l'une quelconque des revendications 9 à 16, **caractérisé en ce que** le laminé en forme de feuille (10B) est enroulé autour du tambour de fabrication (51) dans un état où le laminé en forme de feuille et une couche de composition de caoutchouc sont liées ensemble.

Fig.1

Fig.2

Fig.3

Fig.4

Fig.5

Fig.6

EP 2 143 569 B1

## Fig.7

## Fig.8

Fig.9

Fig.10

Fig.11

Fig.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006315339 A
- JP 2006082273 A
- EP 1642705 A1
- US 6402867 B1
- JP 2007099118 A